# EUROPÄISCHE PATENTSCHRIFT

(11) **EP 2 668 409 B1**
(45) Veröffentlichungstag und Bekanntmachung des Hinweises auf die Patenterteilung: **21.01.2015**
(21) Anmeldenummer: 11811321.6
(22) Anmeldetag: 15.11.2011
(51) Int. Cl.: F16C 7/06

(54) **ZUG-DRUCK-STANGE**
PUSH-PULL ROD
TIGE DE TRACTION-COMPRESSION

(30) Priorität: 28.01.2011 DE 202011002079 U
(43) Veröffentlichungstag der Anmeldung: 04.12.2013
(73) Patentinhaber: GMT Gummi-Metall-Technik GmbH, 77815 Bühl (DE)
(72) Erfinder: UHL, Albert, 77815 Bühl (DE)
(74) Vertreter: Miller, Andreas
(86) Internationale Anmeldenummer: PCT/EP2011/005749
(87) Internationale Veröffentlichungsnummer: WO 2012/100794

(56) Entgegenhaltungen:
- DE-U1-202004 016 321

## Beschreibung

Die Erfindung betrifft eine Zug-Druck-Stange, insbesondere geeignet zur Führung und mechanischen Lagerung vorzugsweise im Flugzeugbau, aber auch im sonstigen Maschinen- und Fahrzeugbau.

Zug-Druck-Stangen für dieses Einsatzgebiet bestehen im Allgemeinen aus einem rohrförmigen Körper, an dessen beiden Enden sich jeweils ein Adapter zur Montage der Zug-Druck-Stange befindet. Diese Zug-Druck-Stangen sind in der Regel in ihrer Länge verstellbar, um einen Toleranzausgleich bzw. eine Anpassung an einen vorgegebenen Abstand zwischen den Montagepunkten vornehmen zu können. Beispielhaft sei auf die aus dem Deutschen Gebrauchsmuster DE 20 2004 016 321 U1 bekannte Zug-Druck-Stange verwiesen, aus dem das EP 1805427 B1 hervorgegangen ist. Diese Zug-Druck-Stange ist dadurch gekennzeichnet, dass sie über zwei Rastelemente verfügt, von denen das erste als Sicherungsklipp über einen Schwenkarm am Adapter und das zweite am rohrförmigen Körper angebracht ist. Ersteres weist einen mit einer Rastnase versehenen Teilring auf, der das als Zahnkranz ausgebildete Rastelement des Rohres zu dreiviertel federnd umfasst und auf diesen dadurch eine ausreichende Kraft ausübt, um den Rohrkörper und den Adapter miteinander in Drehrichtung wieder lösbar zu arretieren. Diese Konstruktion hat sich im Einsatz von Flugzeugbau im Wesentlichen bewährt.

Da allerdings aufgrund der Notwendigkeit, einerseits eine leichte, fast stufenlose Montage und korrekte Einstellung des notwendigen Abstandes zwischen den beiden Montagepunkten zu erreichen, die Arretierung nicht zu fest sein darf, andererseits nach der Endmontage aber eine nicht beabsichtigte Verstellung der Einbaulänge auf jeden Fall vermieden werden muss, ist es Aufgabe der Erfindung, einen Weg zu finden, einerseits eine leichtgängige Einstellung ohne Zuhilfenahme von Werkzeugen zu erreichen, andererseits aber auch ein nicht beabsichtigtes Verstellung der Einbaulänge durch Unachtsamkeit oder Fehlbedienung sicher zu vermeiden.

Dies wurde erfindungsgemäß wie folgt erreicht.

Gemäß der der Erfindung zugrunde liegenden Zug-Druck-Stange nach DE 20 2004 016 321 U1 und EP 1805427 umschließt der im Sicherungsklipp als federnde Klammer wirkende Teilring mit Rastnase den Zahnkranz zu dreiviertel, wobei eine Verdrehung des Rohrkörpers im geschlossenen Zustand des Sicherungsklipps nur möglich ist, wenn sich die Rastnase des Teilrings durch Auffedern aus dem Zahnkranz bewegen kann. Es gilt daher ein unerwünschtes Auffedern der Klammer bzw. des Teilrings zu verhindern. Der Teilring, der den Zahnkranz zu dreiviertel federnd umfasst, wird daher an seinen beidseitigen Enden mit je eine Aufbiegung versehen, die zur Befestigung und zum Einschnappen eines Riegels geeignet sind. Es wurde nämlich überraschend gefunden, dass eine unbeabsichtigte Entriegelung der Rastelemente durch eine eigentlich funktionswidrige, aber im Bedarfsfalle einfach wieder zu lösende Verriegelung des Teilrings an den aufgebogenen Enden, die den Zahnkranz zusammen mit dem dreiviertel Teilring ganz umschließt, verhindert werden kann, ohne dass die vorteilhafte Eigenschaft der funktionsmäßig erforderlichen ausreichenden Leichtgängigkeit beeinträchtigt wird, da dieser Riegel so gestaltet ist, dass er in den eigentlichen Arretier- und Lösungsmechanismus der Rastelemente nicht eingreift.

Die Lösung wurde erfindungsgemäß dadurch gefunden, dass ein Riegel aus vorzugsweise federndem Edelstahl an dem Teilring angebracht wird, wobei das Problem bestand, dass dieser Riegel einerseits fest mit dem Teilring zumindest auf einer Seite verbunden sein soll, aber jederzeit bei der Montage der Zug-Druck-Stange auch bei aufgeklapptem und/oder eingeklapptem Sicherungsklipp ausreichend weit zu öffnen ist. Die Lösung der Aufgabe wurde dadurch erreicht, dass der Riegel scharnierartig an einem der aufgebogenen Enden des Teilrings mit zwei Rastnasen beweglich befestigt wird und der ansonsten plane Riegel in das andere aufgebogene Ende des Teilrings mit einer federnden, zum aufgebogene Ende des Teilrings komplementär geformten Lasche formschlüssig einrastet und so eine sichere Verriegelung des Teilrings zur Vermeidung von unbeabsichtigten Verdrehungen gewährleistet wird.

Außerdem ist der Riegel auf der Scharnierseite mit einer federnd ausgebildeten und in das aufgebogene Ende des Teilrings eingreifende Zunge versehen, die den Riegel nach dem Öffnen in der gewünschten Offenstellung hält, damit dieser beim Schließen des Sicherungsklipps den Schließvorgang nicht behindert.

Die Erfindung wird nachfolgend an Hand eines bevorzugten Ausführungsbeispiels näher erläutert.

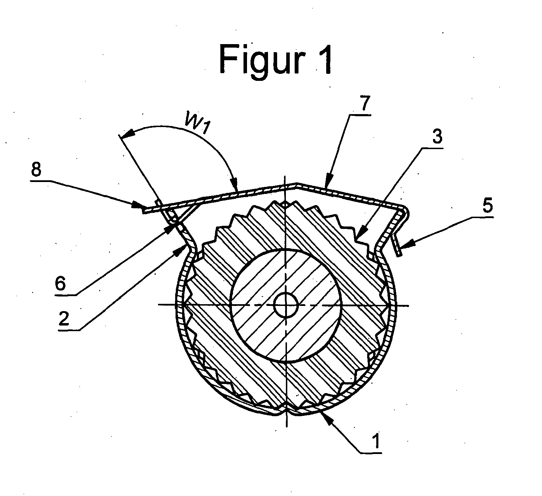

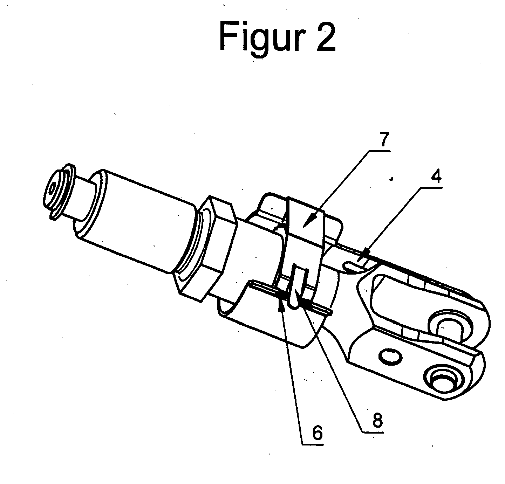

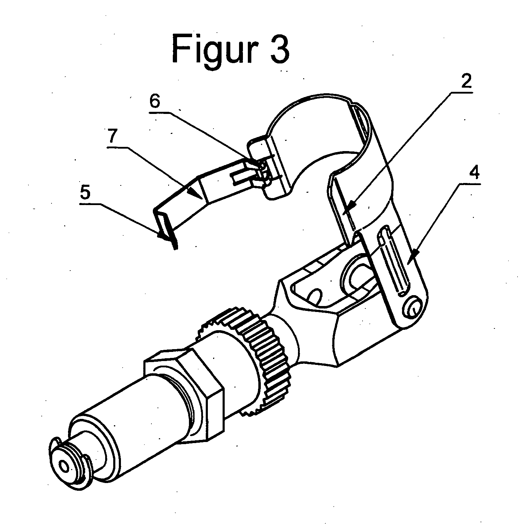

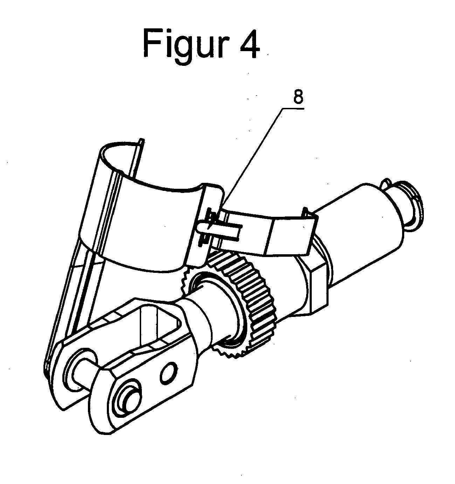

Es zeigt Figur 1 den Zahnkranz 3 mit dem zu dreiviertel umfassenden Teilring 1 mit den aufgebogenen Enden 2, den Riegel 7 mit der federnden Lasche 5 und dem Scharnier 6 mit der Zunge 8 im Querschnitt. Figur 2 zeigt ein Ende der Zug-Druck-Stange mit dem zugeklappten Sicherungsklipp 4, dem Riegel 7, der eingerasteten Lasche 5 mit Scharnier 6 und der Zunge 8. Figur 3 zeigt den aufgeklappten Sicherungsklipp 4 mit geöffnetem Riegel 7, geöffneter Lasche 5 sowie Scharnier 6.

## Patentansprüche

1. Zug-Druck-Stange mit einem einen Teilring aufweisenden Sicherungsklipp, der einen zur Zug-Druck-Stange gehörenden Zahnkranz (3) zu dreiviertel umfasst und zwei nach außen aufgebogene Enden (2) aufweist **dadurch gekennzeichnet, dass** an diesen Enden eine Verriegelung angebracht ist, bestehend aus einem Riegel (7) aus vorzugsweise federndem Edelstahl, der auf einer Seite mit einem Scharnier (6) beweglich befestigt ist und auf der anderen Seite ein komplementär zum Teilringende winkelig geformte federnde Endlasche (5) aufweist, die geeignet ist, das andere aufgebogene Ende des Teilrings formschlüssig zu umschließen.

2. Zug-Druck-Stange nach Anspruch 1 **dadurch gekennzeichnet, dass** das Scharnier (6) so ausgestaltet ist, dass der Riegel (7) mit einem ausreichend weitem Winkel von vorzugsweise 90 Grad geöffnet werden kann.

3. Zug-Druck-Stange nach Anspruch 1 und 2, **dadurch gekennzeichnet, dass** das Scharnier (6) aus zwei getrennten Rastnasen besteht, welche in das eine aufgebogene Ende (2) des Teilrings (1) in zwei dafür vorgesehenen Aussparungen eingeschoben werden und das Scharnier dadurch mit dem Teilring fest, aber beweglich verbunden wird.

4. Zug-Druck-Stange nach Ansprüchen 1 bis 3, **dadurch gekennzeichnet, dass** das federnde, freibewegliche Ende des Riegels (7) einen passgenauen, komplementär zu dem anderen aufgebogenen Ende des Teilringes eingebogenen Winkel aufweist und in dieses formschlüssig einrastet.

5. Zug-Druck-Stange nach Ansprüchen 1 bis 4, **dadurch gekennzeichnet, dass** an dem Riegel (7) auf der Scharnierseite eine Zunge (8) derart angebracht ist, dass diese beim Öffnen des Riegels in das aufgebogene Ende (2) des Teilrings (1) eingreift und somit den Riegel offenstehend hält, damit er das Schließen des Sicherungsklipps nicht behindert.

## Claims

1. Draw-pull bar with a securing clip presenting a partial ring which surrounds three quarters of the toothed ring (3) of the draw-pull bar and disposing of two bent up ends (2), **characterized in that** a locking mechanism is fitted to both ends consisting of a bar (7) made of resilient stainless steel preferably which is moveably attached by a hinge (6) on the one side and of an angularly shaped resilient end flap (5) as-a complementary element on the other side which is suitable to enclose the other bent up end of the partial ring in an interlocking manner.

2. Draw-pull bar according to claim 1 **characterized in that** the hinge (6) is shaped in such a way that the bar (7) can be opened with a sufficiently wide angle of 90 degrees preferably.

3. Draw-pull bar according to claims 1 and 2 **characterized in that** the hinge (6) consists of two separate locking noses which are pushed into the two recesses of the bent up end (2) of the partial ring (1) provided for this purpose, thus connecting the hinge firmly but moveably to the partial ring.

4. Draw-pull bar according to claims 1 to 3 **characterized in that** the resilient, freely moveable end of the bar (7) has an accurately fitting in-bent angle complementary to the other bent up end of the partial ring, snapping into the partial ring in an interlocking manner.

5. Draw-pull according to claims 1 to 4 **characterized in that** a tongue (8) is attached to the bar (7) on the side of the hinge in such a way that the said engages in the bent up end (2) of the partial ring (1) when the bar is opened, thus holding the bar open securing that the bar does not obstruct the closure of the securing clip.

## Revendications

1. Barre de traction/compression avec un clip de sécurité doté d'une bague partielle entourant à trois-quarts une couronne dentée (3) faisant partie de la barre de traction/compression et de deux extrémités cambrées vers l'extérieur (2), se démarquant par un dispositif de verrouillage fixé sur ces extrémités, composé d'un verrou (7), de préférence en acier inoxydable élastique, qui d'un côté est fixé avec une charnière de façon mobile et qui de l'autre côté, est doté d'une collerette terminale élastique (5) de forme angulaire complémentaire à la terminaison de la bague partielle destinée à fermer l'autre extrémité cambrée de la bague.

2. Barre de traction/compression selon revendication 1 se démarque par le fait que la charnière (6) est conçue de manière à ce que le verrou (7) puisse être ouvert avec un angle suffisant de 90 degrés de préférence.

3. Barre de traction/compression selon revendications 1 et 2 se démarque par le fait que la charnière (6) est composée de deux becs d'encliquetage séparés qui sont insérés dans l'une des deux extrémités cambrées (2) de la bague partielle (1) dans deux renfoncements prévus à cet effet, reliant ainsi la charnière à la bague partielle de manière fixe, mais mobile.

4. Barre de traction/compression selon revendications 1 à 3 se démarque par le fait que l'extrémité élastique mobile du verrou (7) est dotée d'un angle parfaitement ajusté complémentaire à l'autre extrémité cambrée de la bague partielle et qu'elle peut y être encliquetée parfaitement.

5. Barre de traction/compression selon revendications 1 à 4 se démarque par le fait qu'une languette (8) est fixée sur le verrou (7) sur le côté de la charnière de manière à ce que celle-ci soit encliquetée dans l'extrémité cambrée (2) de la bague partielle (1) lors de l'ouverture du verrou et maintienne ainsi le verrou ouvert afin qu'il ne gêne pas la fermeture du clip de sécurité.
